# EUROPÄISCHE PATENTSCHRIFT

(11) **EP 2 489 251 B1**
(45) Veröffentlichungstag und Bekanntmachung des Hinweises auf die Patenterteilung: **26.03.2014**
(21) Anmeldenummer: 12401019.0
(22) Anmeldetag: 13.02.2012
(51) Int. Cl.: A01C 7/08

(54) **Pneumatischer Dosierer**
Pneumatic dosing device
Doseur pneumatique

(30) Priorität: 19.02.2011 DE 102011000829; 01.09.2011 DE 102011053186; 21.12.2011 DE 102011056738
(43) Veröffentlichungstag der Anmeldung: 22.08.2012
(73) Patentinhaber: Amazonen-Werke H. Dreyer GmbH & Co. KG, 49205 Hasbergen (DE)
(72) Erfinder: Bruns, Helmut, 27804 Berne (DE); Mertens, Daniel, 26135 Oldenburg (DE)

(56) Entgegenhaltungen:
- US-A- 4 296 695
- US-A- 4 453 866
- US-A- 4 852 809
- US-A- 5 826 523

## Beschreibung

Die Erfindung betrifft ein Verfahren gemäß des Oberbegriffes des Patentanspruches 1.

Ein derartiges Verfahren zum Dosieren ist beispielsweise durch die EP 1 064 833 B1 bekannt. Dieser Dosierer weist eine Vielzahl von zugeordneten Materialleitungen auf. Diese Dosierer ist nur dafür vorgesehen, dass sämtliche Materialleitungen immer von dem Dosierer versorgt werden und dass alle Materialleitungen immer Material ausbringen. Eine Verringerung der mit Material vom Dosierer versorgten Materialleitung, d.h. eine Reduzierung der Arbeitsbreite der Verteilmaschine, ist hier nicht vorgesehen.

Ein weiteres Verfahren ist aus der US 5 826 523 bekannt.

Der Erfindung liegt die Aufgabe zu Grunde, ein Verfahren zum Dosieren mit einem für vielfältige Einsatzzwecke verwendbaren Dosierer zu schaffen, wobei unter Beibehaltung der für alle zumindest annähernd gleichmäßiger Luftströmung in den Materialleitungen, eine Verringerung der Anzahl der aktiv mit Material und Luftströmung beaufschlagten Materialleitungen zu ermöglichen.

Diese Aufgabe wird erfindungsgemäß durch die Merkmale des Anspruchs 1 gelöst.

Infolge dieser Maßnahmen werden bei den abzusperrenden Materialleitungen sowohl die Lufteinlassöffnungen wie Abgangsöffnungen mit Verschlussmitteln verschlossen. Hierdurch wird die zugeführte Luftströmung gleichmäßig auf die Lufteinlassöffnungen der aktiven Materialleitungen, denen vom Dosierer Material zugeführt wird, aufgeteilt.

Eine vorteilhafte gleichmäßige Luftführung lässt sich dadurch erreichen, dass die Lufteinlassöffnungen den Abgangsöffnungen gegenüber liegend angeordnet sind.

Eine einfache Ausgestaltung der Verschlussmittel lässt sich dadurch erreichen, dass die Verschlussmittel als stopfen- und/oder kappenartig ausgebildet sind.

In einer Weiterbildung ist vorgesehen, dass die Luftzuleitung unter einem Winkel zwischen 90° und 130° zu dem Boden- und/oder Deckenwand in den Diffusor einmündet, so dass die Boden- und/oder Deckenwand eine Prallfläche für die aus der Luftzuleitung in den Diffusor strömenden Luftstrom ist.

Somit wird ein Diffusor mit Luftzuleitung geschlagen, welcher den Einbau von Luftzuleitung und Diffusor in kompakt bauende Verteilmaschinen mit engen Einbauverhältnissen unter Beibehaltung einer gleichmäßigen Luftverteilung ermöglicht.

Somit wird der von dem Gebläse erzeugte und in den Diffusor einströmende Luftstrom durch den Aufprall auf eine der Innenwände des Diffusors aufgrund des unter einem Winkel eingeleitete Luftstromes fächerartig über die gesamte Innenbreite des Diffusors gleichmäßig auf alle Lufteinlassöffnungen des Dosierers aufgeteilt. Somit kann der Diffusor sehr kurz gebaut werden.

Diese Aufteilung ist besonders gleichmäßig, wenn der Einmündungswinkel der Luftzuleitung zu Boden- und/oder Deckenwand zwischen 100° und 110° beträgt.

Weitere Abdeckmöglichkeiten für Lufteinlassöffnungen werden dadurch erreicht, dass die Verschlussmittel plattenartig ausgebildet sind. Infolge dieser Maßnahmen lassen sich mehrere Lufteinlassöffnungen mit einem entsprechend ausgestalteten Verschlussmittel abdecken.

In einer Ausführungsform ist vorgesehen, dass plattenartigen Verschlussmittel als Platte ausgebildet ist, dass die Platte in dem als Verschlussmittel dienenden Bereich einen geschlossenen Flächenbereich und im die die Abgangsöffnungen nicht abzudeckenden Bereich eine und/oder mehrere entsprechende Aussparungen aufweist. Hierdurch ist es in einfacher Weise möglich, mit einem entsprechend ausgestalteten Plattenelement die gewünschte Anzahl von Lufteinlassöffnungen abzudecken bzw. zu verschließen.

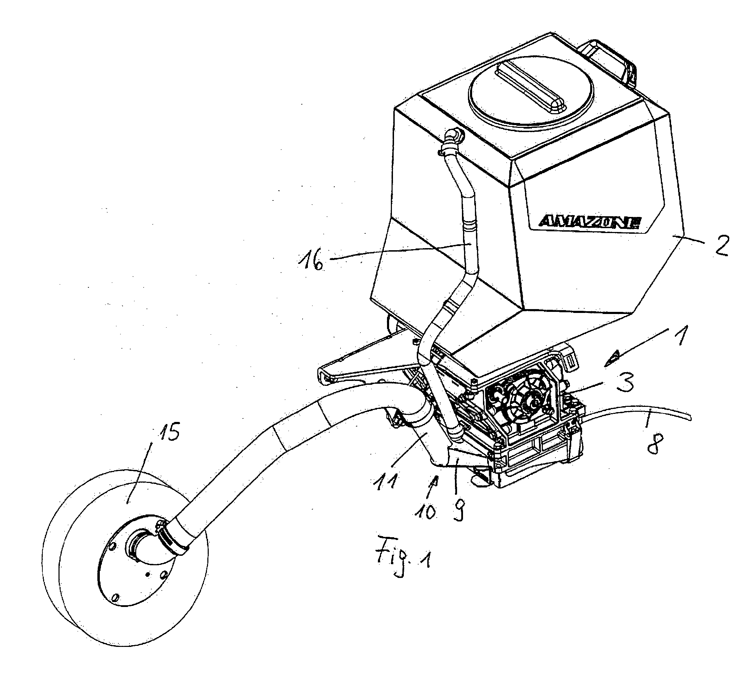

Weitere Einzelheiten der Erfindung sind der Beispielsbeschreibung und den Zeichnungen zu entnehmen. Hierbei zeigen
- Fig. 1: einen Teil der Verteilmaschine mit dem pneumatischen Dosierer in perspektivischer Darstellung,

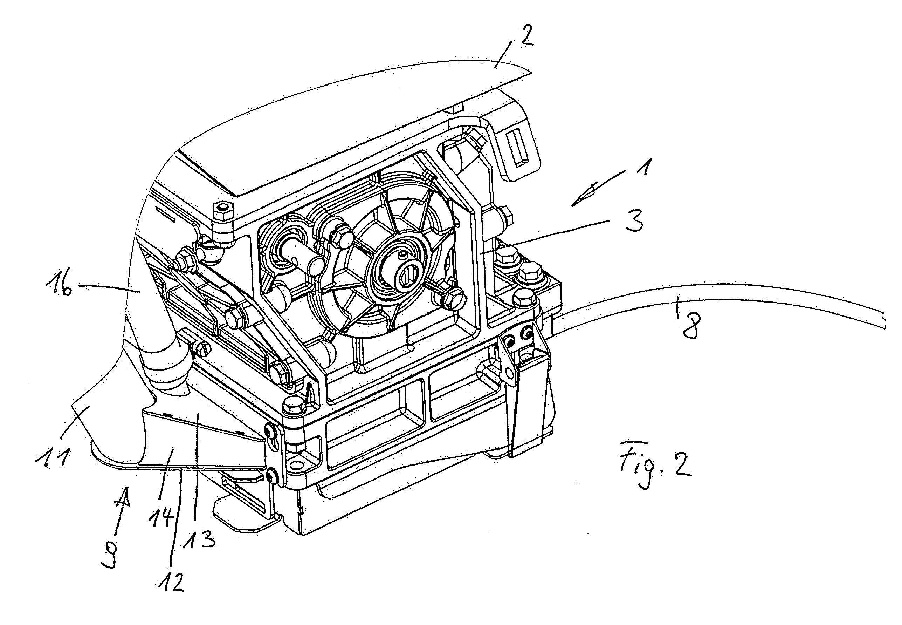

- Fig. 2: den pneumatischer Dosierer im vergrößertem Maßstab und in perspektivischer Darstellung,

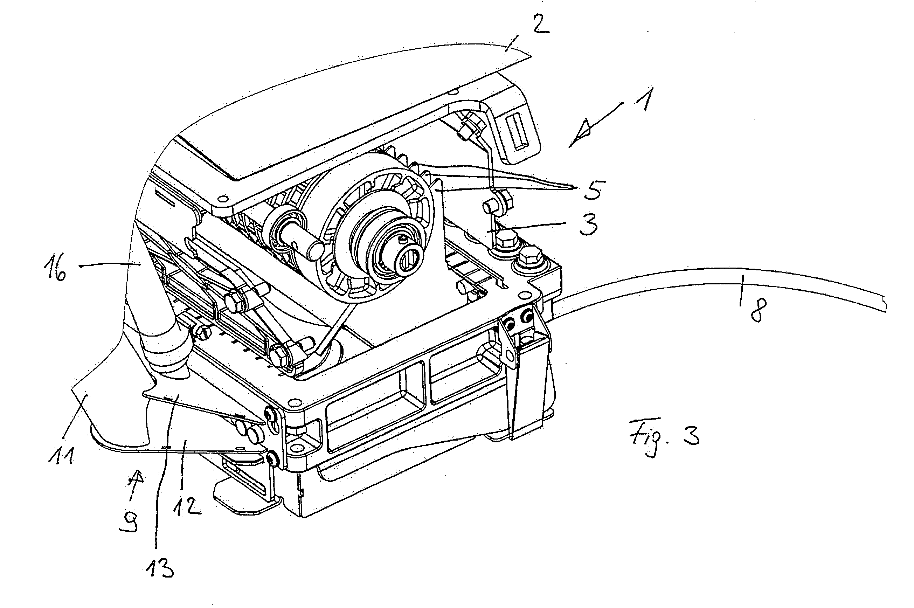

- Fig. 3: den Dosierer in der Darstellungsweise gemäß Fig. 2, wobei die Seitenwand des Dosierers abgenommen ist,

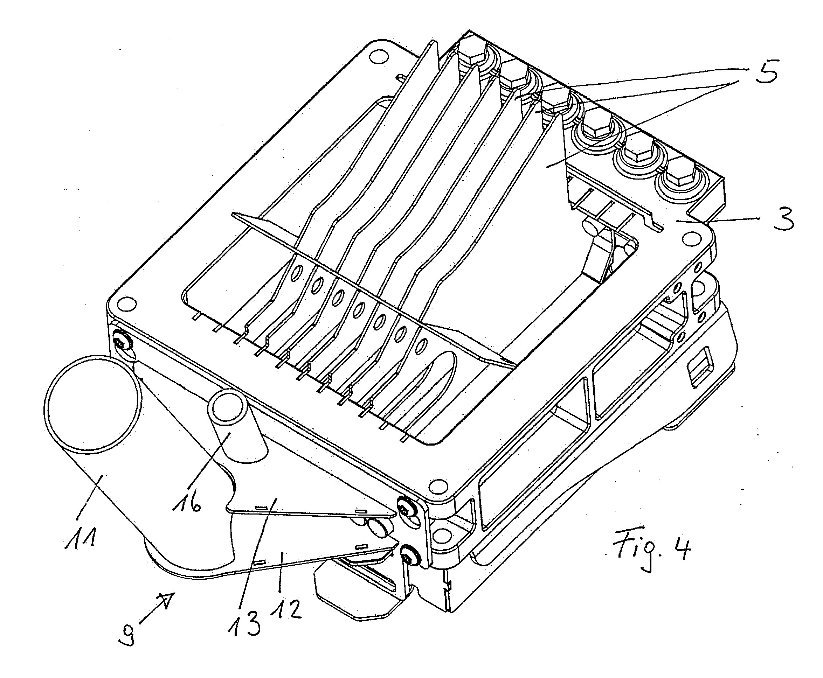

- Fig. 4: das unterhalb des Dosiererelementes des Dosierers angeordnete Einschleusegehäuse der Materialleitungen in perspektivischer Darstellung, wobei die Seitenwand des Dosierers abgenommen ist,

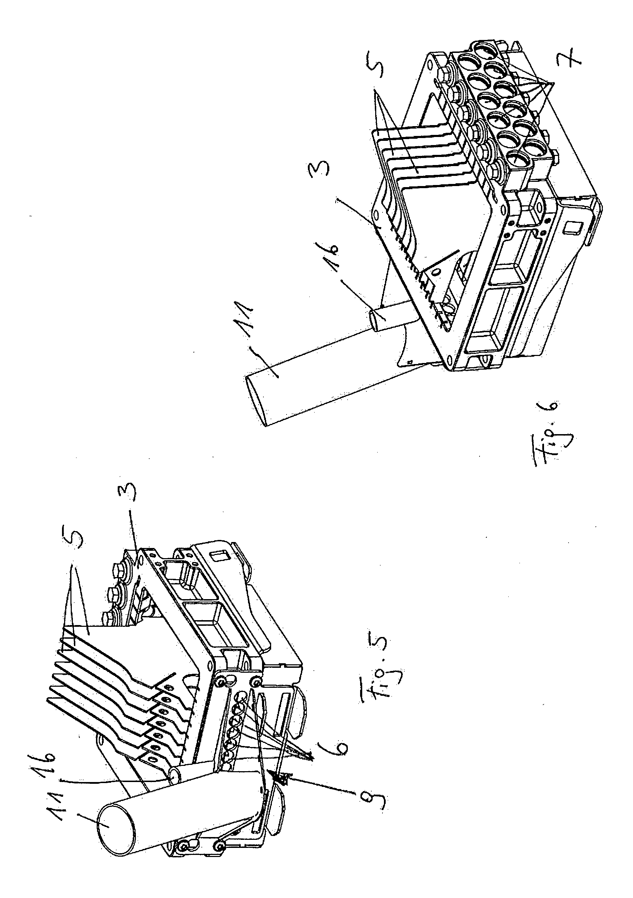

- Fig. 5: das Einschleusegehäuse mit dem vor den Lufteinlässenöffnungen angeordneten Diffusor, wobei die vordere Seitenwand des Diffusors nicht dargestellt ist, in perspektivischer Darstellung,
- Fig. 6: das Einschleusegehäuse mit dem vor den Lufteinlässenöffnungen angeordneten Diffusor, in perspektivischer Darstellung,

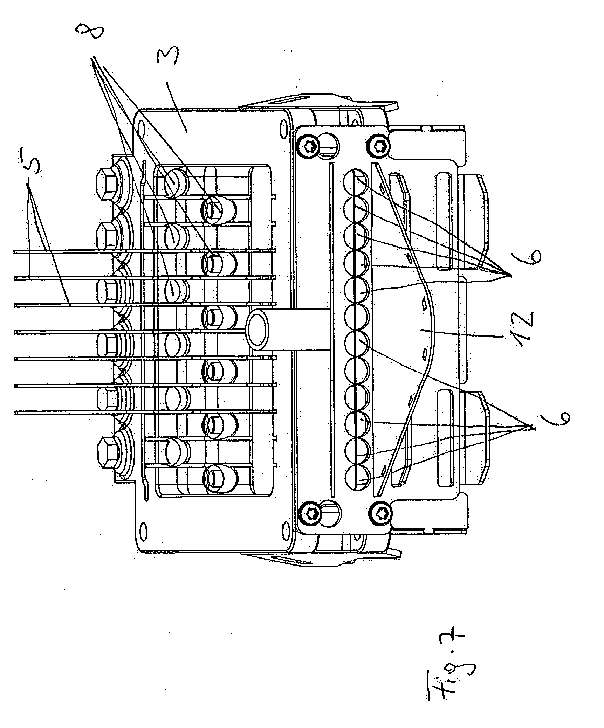

- Fig. 7: das Einschleusegehäuse mit dem vor den Lufteinlässenöffnungen angeordneten Diffusor gemäß Fig. 6, in einer weiteren perspektivischen Darstellung,

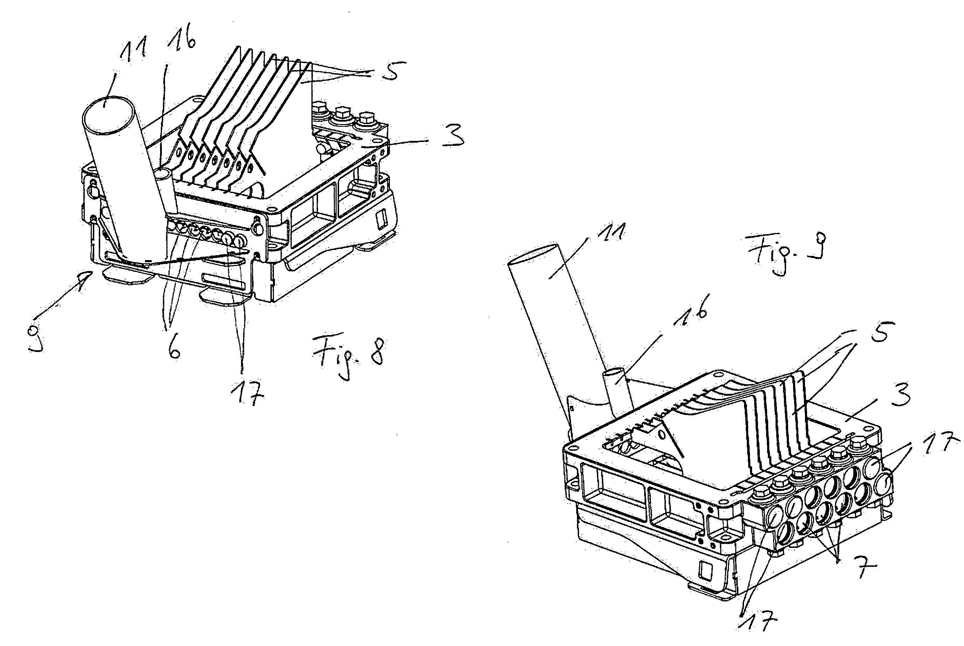

- Fig. 8: das Einschleusegehäuse mit dem vor den Lufteinlässenöffnungen angeordneten Diffusor, wobei die vordere Seitenwand des Diffusors nicht dargestellt ist, in perspektivischer Darstellung, und wobei jeweils die beiden seitlichen Lufteinlassöffnungen mittels Verschlusskappen verschlossen sind,
- Fig. 9: das Einschleusegehäuse mit dem vor den Lufteinlässenöffnungen angeordneten Diffusor, in perspektivischer Darstellung, und wobei jeweils die beiden seitlichen Abgangsöffnungen mittels Verschlusskappen verschlossen sind,

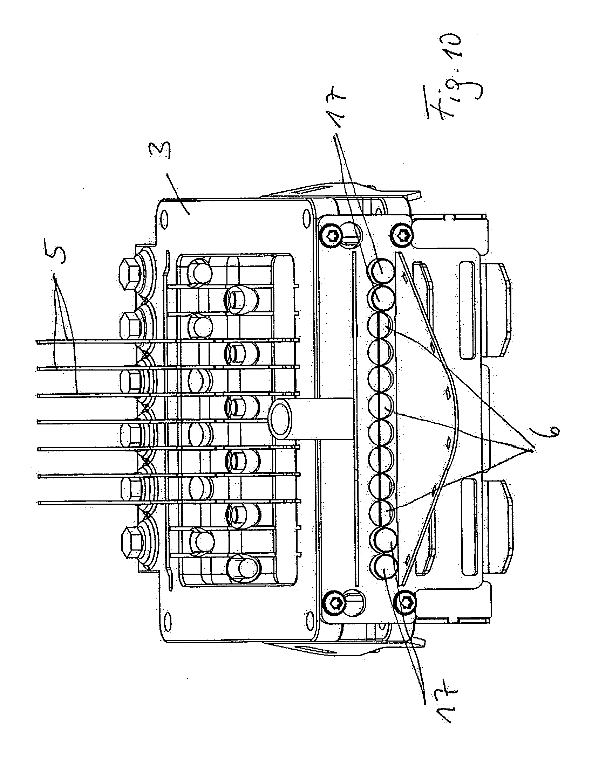

- Fig.10: das Einschleusegehäuse mit dem vor den Lufteinlässenöffnungen angeordneten Diffusor gemäß Fig. 8, wobei die Seitenwände des Diffusors unter die Luftzuleitung nicht dargestellt ist, in perspektivischer Darstellung, und wobei jeweils die beiden seitlichen Lufteinlassöffnungen mittels Verschlusskappen verschlossen sind,

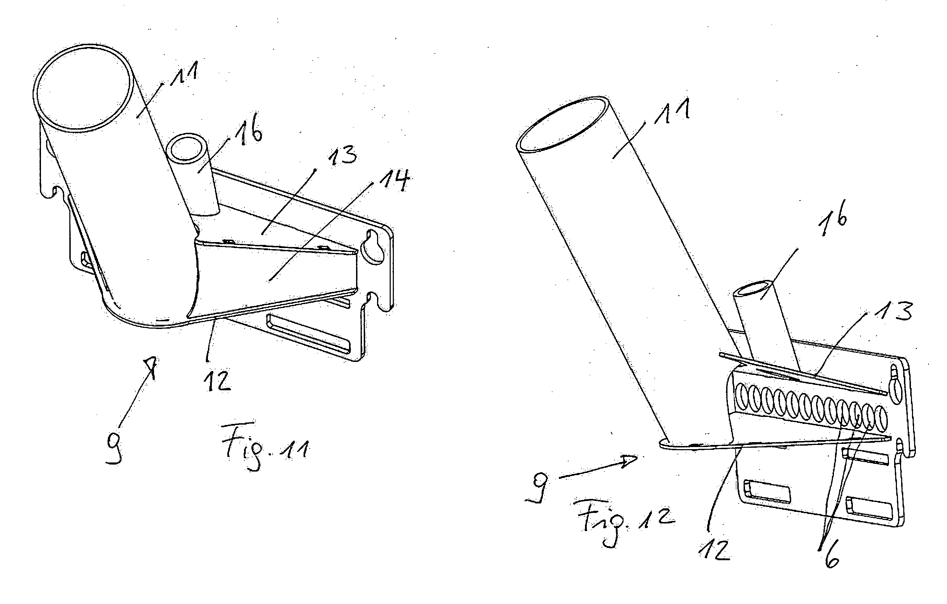

- Fig. 11: der Diffusor in perspektivischer Darstellung,
- Fig. 12: der Diffusor gemäß Fig. 11, wobei die Seitenwand abgenommen ist,
- Fig. 13: ein weiteres Einschleusegehäuse mit dem vor den Lufteinlassenöffnungen angeordneten Diffusor, wobei die vordere Seitenwand des Diffusors nicht dargestellt ist, in perspektivischer Darstellung, und wobei jeweils die beiden seitlichen Lufteinlassöffnungen mittels einer Verschlussplatte verschlossen sind,
- Fig. 14: das Einschleusegehäuse gemäß Fig. 13 mit dem vor den Lufteinlassenöffnungen angeordneten Diffusor, in perspektivischer Darstellung, und wobei jeweils die beiden seitlichen Abgangsöffnungen mittels einer Verschlussplatte verschlossen sind,
- Fig. 15: die Verschlussplatte gemäß Fig. 13 in perspektivischer Darstellung,
- Fig. 16: das Einschleusegehäuse mit dem vor den Lufteinlassenöffnungen angeordneten Diffusor gemäß Fig. 13, wobei die Seitenwände des Diffusors unter die Luftzuleitung nicht dargestellt ist, in perspektivischer Darstellung, und wobei jeweils die beiden seitlichen Lufteinlassöffnungen mittels einer Verschlussplatte verschlossen sind,
- Fig. 17: der Diffusor mit einer zugeordneten Verschlussplatte in perspektivischer Darstellung und
- Fig. 18: der Diffusor gemäß Fig. 17, wobei die Seitenwand abgenommen ist.

Der pneumatische Dosierer 1 ist unterhalb der Auslassöffnung eines Vorratsbehälters 2, der zur Aufnahme von auszubringenden landwirtschaftlichen Materialien bestimmt ist, angeordnet. Der Vorratsbehälter 2 ist an dem Rahmen einer landwirtschaftlichen Verteilmaschine in geeigneter Weise befestigt.

Der Dosierer 1 weist ein Dosiergehäuse 3 auf. In dem Dosiergehäuse 3 ist eine nicht näher dargestellte in regelbarer Weise antreibbare Dosierwalze 4 gelagert. In dem Dosiergehäuse 3 sind Materialeinleitvorrichtungen 5 angeordnet. Diesen Materialleiteinrichtungen 5 wird von der Dosiererwalze 4 in einstellbaren Mengen das sich im Vorratsbehälter 2 befindliche landwirtschaftliche Material zugeleitet. Auf der einen Seite sind dem Dosiergehäuse 3 Lufteinlassöffnungen 6, die mit dem Materialleiteinrichtungen 5 verbunden sind, und auf der anderen Seite sind dem Dosiergehäuse 3 Abgangsöffnungen 7, an welche zu Ausbringorganen führende Materialleitungen 8 anschliessbar sind, zugeordnet. Die Lufteinlassöffnungen 6 sind den Abgangsöffnungen 7 gegenüber liegend angeordnet.

Vor den Lufteinlassöffnungen 6 ist ein Diffusor 9 angeordnet, der den Anschlussbereich 10 der Luftzuleitung 11 an das Gehäuse 3 vor den Lufteinlassöffnungen 6 bildet. Der Diffusor 9 weist jeweils eine beabstandet zueinander angeordnete Boden- 12 und Deckenwand 13 sowie Seitenwand 14 auf. An den Diffusor 9 ist eine Luftzuleitung 11, die an ein Gebläse 15, welches einen Druckluftstrom erzeugt, angeschlossen. Die Luftzuleitung 11 mündet unter einem Winkel zwischen 90° und 130°, vorzugsweise 100° und 110° zu der Bodenwand 12 und/oder Deckenwand 13 in den Diffusor 9 ein, wie die Zeichnungen zeigen. Hierdurch bildet beim Ausführungsbeispiel die Bodenwand 12 eine Prallfläche für den aus der Luftzuleitung 11 in den Diffusor 9 einströmenden Luftstrom. Hierdurch teilt sich der einströmende Luftstrom in dem Diffusor 9 gleichmäßig auf, so dass alle Lufteinlassöffnungen 6 in dem Dosiergehäuse 3, die über die Materialleiteinrichtungen 5 zu den Abgangsöffnungen 7 und den daran angeschlossenen Materialleitungen 8 führen, zumindest annähernd gleichmäßig mit der gleichen Luftströmung versorgt und beaufschlagt werden.

Das pneumatische Fördersystem ist als geschlossenes Druckluftsystem ausgebildet. Hierzu ist der Vorratsbehälter 2 druckdicht ausgestaltet und verschlossen. Um dem Vorratsbehälter 2 mit Druckluft zu beaufschlagen und so unter einem Überdruck gegenüber dem Atmosphärendruck zu setzen, führt eine Verbindungsleitung 16 von dem Diffusor 9 zu dem Vorratsbehälter 2.

Um den erfindungsgemäßen pneumatischen Dosierer 3 für eine unterschiedliche Anzahl anzuschließender Materialleitungen 8, und somit für eine unterschiedliche Anzahl von Maschinen unterschiedlicher Arbeitsbreiten oder mit unterschiedlich vielen Ausbringorganen ausgestatteten Verteilmaschine verwenden zu können, lassen sich einzelne Abgangsöffnungen 7 an dem Dosiergehäuse 3 stilllegen. Hierzu werden sowohl die entsprechenden Lufteinlassöffnungen 6 wie auch die entsprechenden Abgangsöffnungen 7 mit als Verschlussstopfen 17 ausgebildeten Verschlussmitteln verschlossen. Diese Verschlussmitteln 17 sind stopfen- und/oder kappenartig ausgestaltet. Hierbei werden immer gegenüberliegende Lufteinlassöffnungen 6 und Abgangsöffnungen 7 entsprechend verschlossen. Durch das Verschließen der Lufteinlassöffnungen 6 und zusätzlich der entsprechenden gegenüberliegenden Abgangsöffnungen 7 wird somit eine gleichmäßige Luftaufteilung und eine gute Materialführung von dem Druckluftstrom innerhalb des Dosiergehäuses 3 im Bereich der Materialleiteinrichtungen 5 und in den an den Abgangsöffnungen 7 angeschlossenen Materialleitungen 8 erreicht.

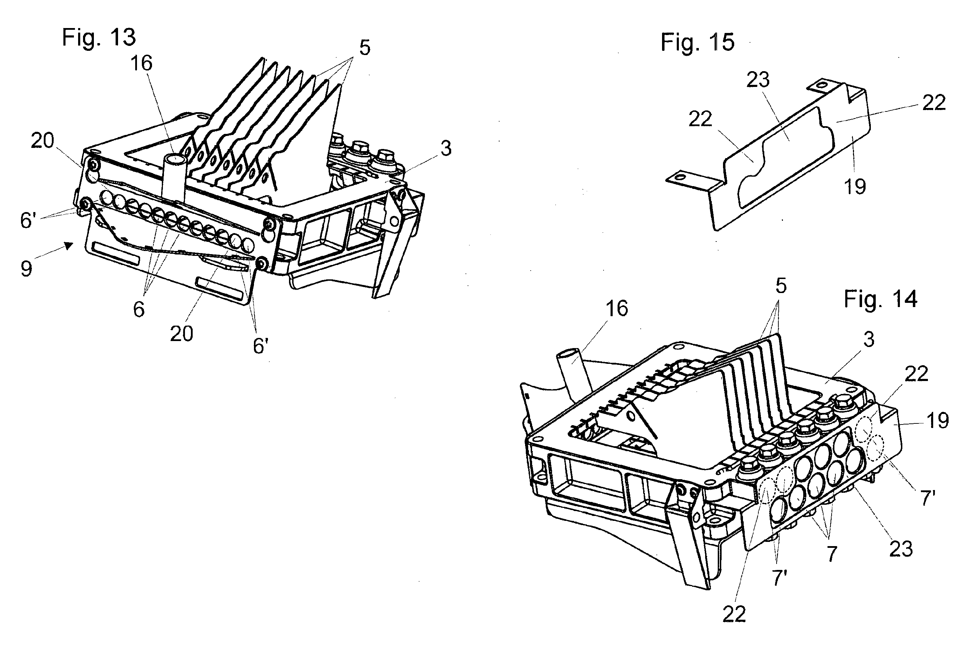

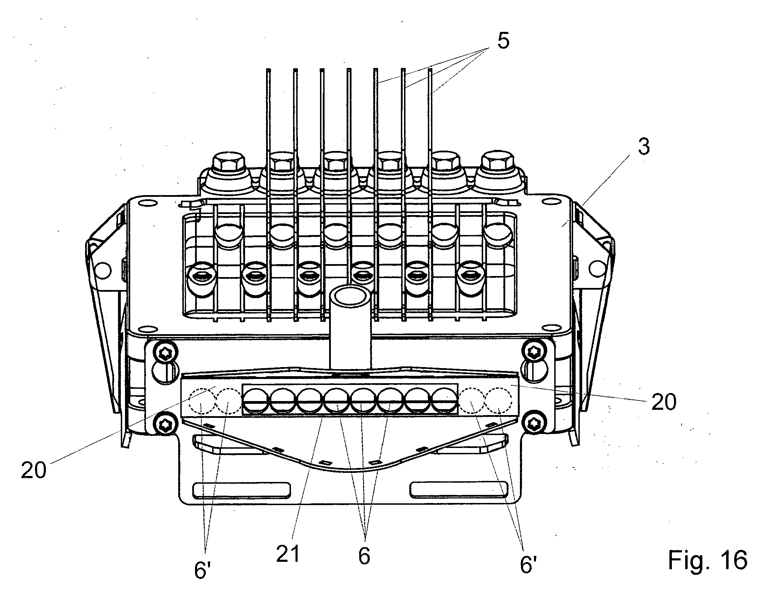

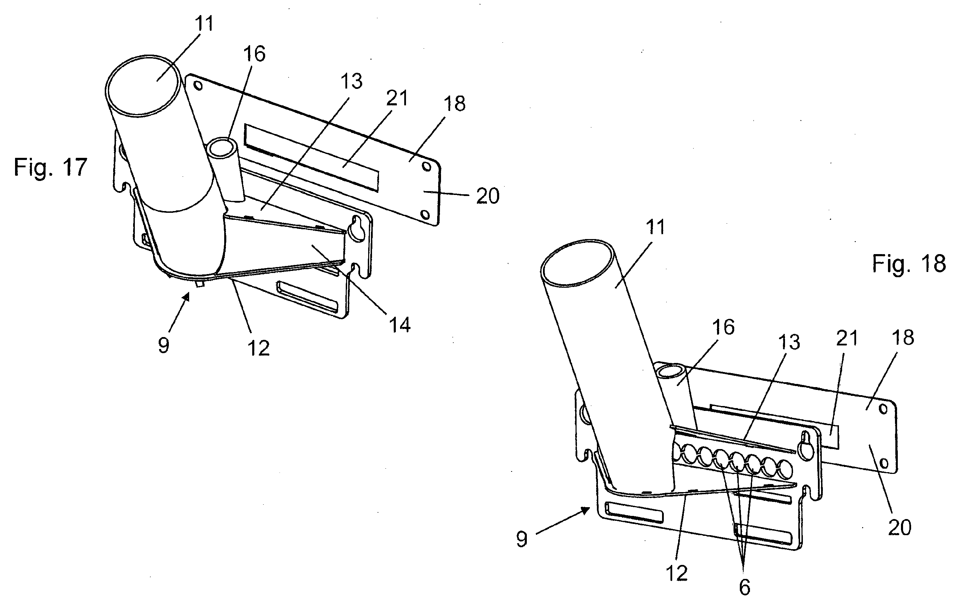

Um den erfindungsgemäßen pneumatischen Dosierer 3 gemäß Fig. 13 bis 18 für eine unterschiedliche Anzahl anzuschließender Materialleitungen 8, und somit für eine unterschiedliche Anzahl von Maschinen unterschiedlicher Arbeitsbreiten oder mit unterschiedlich vielen Ausbringorganen ausgestatteten Verteilmaschine verwenden zu können, lassen sich einzelne Abgangsöffnungen 7 an dem Dosiergehäuse 3 stilllegen. Hierzu werden sowohl die entsprechenden Lufteinlassöffnungen 6' mit als Verschlussplatten 18 ausgebildeten Verschlussmitteln wie auch die entsprechenden Abgangsöffnungen 7' mit als Verschlussplatten 19 ausgebildeten Verschlussmitteln verschlossen. Diese Verschlussmitteln 18 und 19 sind plattenartig ausgestaltet.

Die plattenartigen Verschlussmittel sind als Platte 18 ausgebildet ist. Die Platte 18 weist in dem als Verschlussmittel dienenden Bereich einen geschlossenen Flächenbereich 20 und im die die Lufteinlassöffnungen 6 nicht abzudeckenden Bereich eine und/oder mehrere entsprechende Aussparungen 21 auf.

Die plattenartigen Verschlussmittel sind als Platte 19 ausgebildet ist. Die Platte 19 weist in dem als Verschlussmittel dienenden Bereich einen geschlossenen Flächenbereich 22 und im die die Abgangsöffnungen 7 nicht abzudeckenden Bereich eine und/oder mehrere entsprechende Aussparungen 23 auf.

Hierbei werden immer gegenüberliegende Lufteinlassöffnungen 6, 6' und Abgangsöffnungen 7, 7' entsprechend verschlossen. Durch das Verschließen der Lufteinlassöffnungen 6 und zusätzlich der entsprechenden gegenüberliegenden Abgangsöffnungen 7 wird somit eine gleichmäßige Luftaufteilung und eine gute Materialführung von dem Druckluftstrom innerhalb des Dosiergehäuses 3 im Bereich der Materialleiteinrichtungen 5 und in den an den Abgangsöffnungen 7 angeschlossenen Materialleitungen 8 erreicht.

## Patentansprüche

1. Verfahren zum pneumatischen Dosieren von landwirtschaftlichen Materialien, insbesondere Micogranulat, in einem Luftstrom mit einem pneumatischen Dosierer mit einem Dosiergehäuse (3), welches Einlassöffnungen (6), an welche zumindest eine von einem Gebläse mit Druckluft beaufschlagte Luftzuleitung (11) angeschlossen ist und Abgangsöffnungen (7), an denen mit einer Luftströmung beaufschlagte Materialleitungen (5) anschließbar sind, aufweisen, wobei die Abgangsöffnungen (7), an denen keine Materialleitungen (5) angeschlossen sind, mit Verschlussmitteln (17) verschließbar sind und wobei die Anzahl der Lufteinlassöffnungen (6) in das Gehäuse (3) gleich der Anzahl der Abgangsöffnungen (7) aus dem Gehäuse (3) ist, **dadurch gekennzeichnet, dass** je nach Einsatzzweck die gleiche Anzahl Lufteinlassöffnungen (6) wie diesen Lufteinlassöffnungen (6) gegenüber liegende Abgangsöffnungen (7) mit stopfen- und/oder kappenartig oder plattenartig ausgebildeten Verschlussmitteln (17) bei Absperrung der Abgangsöffnungen (7) verschlossen werden.

2. Verfahren nach Anspruch 1, **dadurch gekennzeichnet, dass** das Verschließen mit einem als Platte (18, 19) ausgebildeten Verschlussmittel geschieht, wobei die Platte in dem als Verschlussmittel dienenden Bereich einen geschlossenen Flächenbereich (20, 22) und im die die Lufteinlassöffnungen (6) und -abgangsöffnungen (7) nicht abzudeckenden Bereich eine und/oder mehrere entsprechende Aussparung (21, 23) aufweist

## Claims

1. Method for the pneumatic dosing of agricultural materials, in particular micro granules, in an airstream, with a pneumatic dosing device having a dosing housing (3) which has inlet openings (6), to which at least one air supply line (11) charged with compressed air by a fan is connected, and outlet openings (7), to which material lines (5) charged with an air flow are connectable, wherein the outlet openings (7) to which no material lines (5) are connected are closable with closure means (17), and wherein the number of air inlet openings (6) into the housing (3) is equal to the number of outlet openings (7) out of the housing (3), **characterized in that**, depending on the intended use, the same number of air inlet openings (6) as outlet openings (7) opposite said air inlet openings (6) are closed by closure means (17) of stopper-like and/or cap-like or plate-like design when the outlet openings (7) are blocked off.

2. Method according to Claim 1, **characterized in that** the closing takes place with a closure means designed as a plate (18, 19), wherein, in the region serving as the closure means, the plate has a closed surface region (20, 22) and, in the region which is not to cover the air inlet openings (6) and air outlet openings (7), has one and/or more corresponding recesses (21, 23).

## Revendications

1. Procédé de dosage pneumatique de matériaux agricoles, en particulier de microgranulats, dans un flux d'air à l'aide d'un doseur pneumatique pourvu d'un boîtier de doseur (3) qui comprend des ouvertures d'entrée (6) auxquelles est raccordée au moins une conduite d'amenée (11) sollicitée avec de l'air comprimé par un ventilateur et des ouvertures de sortie (7) auxquelles peuvent être raccordées des conduites de matériau (5) sollicitées avec un écoulement d'air, les ouvertures de sortie (7) auxquelles aucune conduite de matériau (5) n'est raccordée pouvant être fermées à l'aide de moyens de fermeture (17) et le nombre des ouvertures d'entrée d'air (6) dans le boîtier (3) étant égal au nombre des ouvertures de sortie (7) hors du boîtier (3), **caractérisé en ce qu'**en fonction de l'application prévue, le même nombre d'ouvertures d'entrée d'air (6) que le nombre d'ouvertures de sortie (7) en regard de ces ouvertures d'entrée d'air (6) sont fermées lors de l'obturation des ouvertures de sortie (7) à l'aide de moyens de fermeture (17) réalisés sous forme de bouchons et/ou de capuchons ou sous forme de plaques.

2. Procédé selon la revendication 1, **caractérisé en ce que** la fermeture se produit à l'aide d'un moyen de fermeture réalisé sous forme de plaque (18, 19) la plaque présentant, dans la région servant de moyens de fermeture, une région de surface fermée (20, 22) et, dans la région qui n'est pas destinée à recouvrir les ouvertures d'entrée (6) et de sortie (7) d'air, un et/ou plusieurs évidement(s) correspondant(s) (21, 23).
